Europäisches Patentamt

European Patent Office

Office européen des brevets

(19)

(11) Publication number: **0 119 947**
**B1**

# EUROPEAN PATENT SPECIFICATION

(12)

(45) Date of publication of patent specification: **01.06.88**

(51) Int. Cl.⁴: **B 60 C 11/04**

(21) Application number: **84630045.7**

(22) Date of filing: **06.03.84**

(54) **A pneumatic tire.**

(30) Priority: **17.03.83 US 476306**

(43) Date of publication of application:
**26.09.84 Bulletin 84/39**

(45) Publication of the grant of the patent:
**01.06.88 Bulletin 88/22**

(84) Designated Contracting States:
**DE FR GB**

(56) References cited:
**FR-A-2 232 454**
**GB-A-1 524 364**

**GUMMIIBEREIFUNG, vol. 48, no. 2, February
1972, pages 23-33; H.NABHOLZ: "Die grosse
Aufgabe der Jugend"**

(73) Proprietor: **THE GOODYEAR TIRE & RUBBER
COMPANY**
**1144 East Market Street**
**Akron, Ohio 44316-0001 (US)**

(72) Inventor: **Lindner, Daniel John**
**476 Layden Avenue**
**Canal Fulton Ohio 44614 (US)**
Inventor: **Fetty, Harold Dewitt**
**44 Bent Tree Road**
**Asheville North Carolina 28804 (US)**

(74) Representative: **Weyland, Joseph Jean Pierre**
**Goodyear Technical Center Luxembourg Patent
Department Avenue Gordon Smith
L-7750 Colmar-Berg (LU)**

Courier Press, Leamington Spa, England.

## Description

The present invention relates to pneumatic tires having a tread configuration according to the introductory clause of patent claim 1, GB—A—1 524 364, for example, describes a tire having such a tread configuration.

A tread portion of a tire is defined by a plurality of grooves which form ground-engaging relief elements. The particular configuration of these relief elements has a significant affect upon dry traction, wet traction, snow traction, noise level and rolling resistance of the tire. It is well known in the art that the obtaining of certain performance characteristics are obtained at the sacrifice of other performance characteristics. For example, generally, a tire which has good traction and handling and all season performance is provided at the expense of noise level, wear characteristics and a tire which has good wear is provided at the expense of handling and traction.

A new tread configuration of the kind set forth which has low noise characteristics while also maintaining good tread wear, dry traction, wet traction, handling and all season performance is described in the characterizing portion of patent claim 1.

Figure 1 is a perspective view of a tire having a tread pattern made in accordance with the present invention;

Figure 2 is an enlarged fragmentary plan view of the tread portion of figure 1; and

Figure 3 is a perspective view of a tire having another tread portion made in accordance with the present invention.

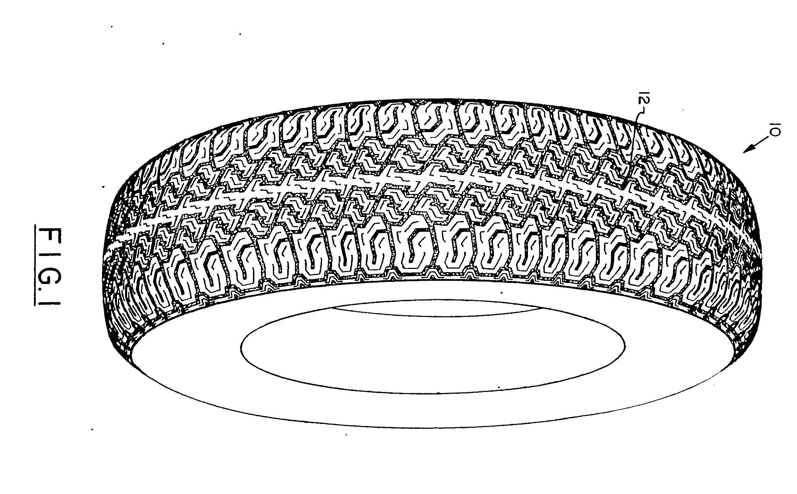

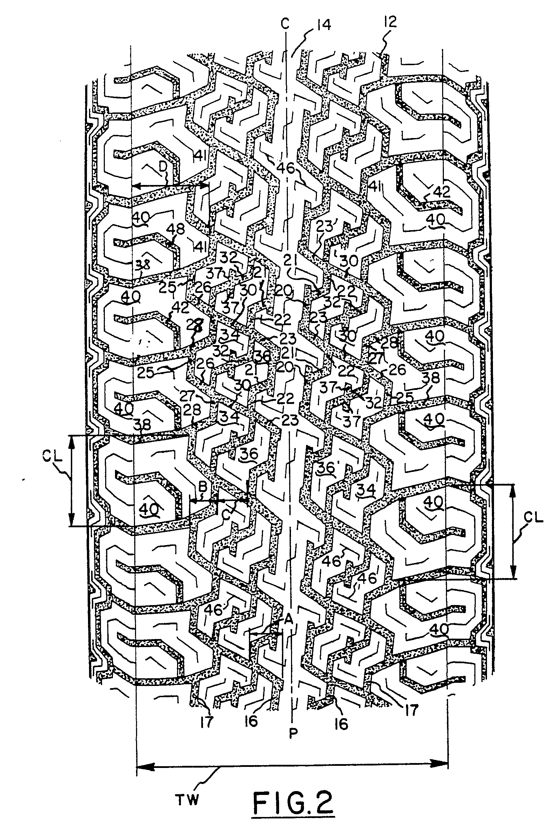

Referring to figures 1 and 2, there is illustrated a pneumatic tire having a ground engaging tread portion 12. The tire of the present invention is designed to be used with passenger vehicles and is of the radial type construction. For the purposes of this invention, a radial tire is a tire in which the reinforcing cords of the carcass ply structure are oriented at an angle with respect to the mid-circumferential centerplane CP of the tire in the range of about 75° to 90°.

The tread portion 12 comprises a circumferentially extending rib 14 which extends about the entire circumference of the tire 10. The rib 14 is disposed substantially in the center portion of the tread 12. Disposed on each axial side or rib 14 there is provided a pair of circumferentially continuous grooves 16 and 17 respectively spaced axially apart. The grooves 16 being adjacent the circumferentially extending ribs 14. Each of said grooves 16 and 17 comprises a plurality of alternating circumferentially and axially extending segments. Each groove 16 is provided with a first circumferentially extending segment 20 which is oriented at an angle between 2° and 20° with respect to the mid-circumferential centerplane of the tire, preferably between 5° and 11°. In the particular embodiment illustrated, the segment 20 is oriented at an angle of approximately 6° with respect to the mid-circumferential centerplane CP. Extending from substantially one end of segment 20, there is provided a first axially extending segment 21 which extends axially outwardly from segment 20 and is oriented at an angle in the range of 60° to 80° and preferably, from 70° to 75° with respect to the mid-circumferential centerplane CP of the tire. In the particular embodiment illustrated, the segment 21 is oriented at an angle of about 71°. The segment 21 is oriented such that the axially outer end extends in a circumferential direction away from segment 20. Segment 21 preferably has a length less than said first segment 20, generally about one-half the length of segment 20.

Extending from the axially outer end of segment 21, there is provided a second circumferentially extending segment 22 disposed at an angle in the same range as segment 20 and is preferably, parallel to segment 20. Circumferentially extending segment 22 preferably has a length less than that of segment 20, generally segment 22 has a length approximately one-half the length of segment 20.

Extending from the other end of segment 22 there is provided a second axially extending segment 23 which is oriented at an angle in the range of 40° to 70° with respect to the mid-circumferential centerplane CP of the tire, preferably between 50° and 60°. In the particular embodiment illustrated, segment 23 is oriented at an angle of approximately 53°. The segment 23 is oriented such that the other end is disposed axially inward of the end which joins segment 22. The axially inner end of segment 21 meets segment 20. The segments repeat about the circumference of the tire.

Each groove 17 is substantially identical to groove 16 except that it is out phase with groove 17. Groove 17 comprises segments 25, 26, 27 and 28 such that segment 25 corresponds to segment 20, segment 26 corresponds to segment 21, segment 27 corresponds to segment 22 and segment 28 corresponds to segment 23 of groove 16. Each segment 25, 26, 27 and 28 being oriented in the same range of angles as its corresponding segment in groove 16. Groove 17, like groove 16, then repeats the sequence about the circumference of the tire. Groove 17 is out of phase with respect to groove 16 such that axially extending groove segment 30, having substantially the same angle as segment 26 and 23, extends between groove 16 and groove 17 connecting segments 26 and 23.

Connecting the axially inner end of segment 26 with the axially outer end of the next circumferentially adjacent segment 23 opposite in direction to which groove 30 extends, there is provided a connecting groove 32 which is substantially parallel to both grooves 16 and 17. It can therefore be seen that independent blocks 34 and 36 are formed by grooves 16, 17, 32 and 30. In the particular embodiment illustrated, there is provided notched portions 37 in blocks 34 and 36 which are disposed in substantially the same circumferential plant which is perpendicular to the axis of rotation of the tire. However, these notched portions are not critical to the invention and may be omitted if desired.

Circumferential segments 20 and 22 of groove 16 and circumferential groove segments 25 and 27 of groove 17 have a length less than or equal to about 10% of the tread width TW. The length of axial groove segment 21 and 23 of groove 16 and segments 26 and 28 of groove 17 are such that the groove 16 traverses across the tread a distance A and the groove 17 traverses across the tread a distance B. The distances A and B being equal to or less than about 15% of the tread width TW, preferably less than about 10%. In the embodiment illustrated, the distances A and B are each about 8% of the tread width TW. The distances A and B are measured from the axially furthermost spaced point of the groove 16, 17 respectively.

The grooves 16 and 17 on the same side of rib 14 are spaced apart an axial distance less than about 15% of the tread width TW, preferably of about 10%. In the shoulder region of the tire there is provided a plurality of substantially axially extending grooves 38 which extend from the juncture of segments 28 and 25 of groove 17. Grooves 38 are oriented at an angle of at least 70° to 90° with respect to the mid-circumferential centerplane of the tire and preferably, between 75° and 85°. In the particular embodiment illustrated, the grooves 38 are oriented at an angle of about 81°. Axially extending grooves 38 form a plurality of independent blocks 40 therebetween which have a circumferential length CL of between 20% to 35% of the tread width TW, preferably between 25% to 30%. In the particular embodiment illustrated, the length CL is 27% of the tread width TW. The axially inner end portion 41 of block 40 extends axially inward from the tread edge of distance D no greater than 35% of the tread width TW, preferably of at least 20%. In the particular embodiment illustrated, the axially inner end is spaced a distance D from the tread edge of approximately 25% of the tread width TW. The configuration of the shoulder elements significantly contribute to improved performance in noise level, all season performance, tread wear and handling characteristics.

In the particular embodiment illustrated, there is provided a groove 42 which starts in the general area of the juncture of segment 25 and 28 of groove 17 and being generally parallel to segments 27 and 26 of groove 17. Groove 42 has a depth no greater than approximately 50% of the depth of the grooves 38, 17, 16, 30 and 32 and in the particular embodiment illustrated is approximately 45%. It is important that the depth of this groove not be too deep as this would interfere with the rigidity of the shoulder blocks 40 which is an important aspect of the present invention.

For the purposes of this invention, grooves 38, 17, 16, 30 and 32 have a width sufficient such that when in the footprint of the tire, the grooves do not close up at the tread surface so as to provide water channeling passages.

Also for purposes of this invention, the tread width TW is the maximum axial width of the tread as measured from the footprint of the tire taken when the tire is inflated to design inflation pressure and at rated load. The tread edge being the axially outermost boundary of the ground-engaging tread portion.

Applicants have found that by providing a tread pattern in accordance with the present invention, a passenger tire could be made with a tread pattern with excellent noise level characteristics while also maintaining all season traction capabilities and good wear and handling characteristics.

In the particular embodiment illustrated in figure 2, there is provided a plurality of narrow blades or sipes 46 in the blocks 34, 36, 40 and rib 14. These blades preferably do not extend to the peripheral edges of any of the independent elements 24, 26, 42 or central rib 14 so as to provide for stiffer elements for good handling and wear characteristics. These blades are of conventional construction and are well known to those skilled in the art and generally have a depth less than that of the main grooves 16 and 17.

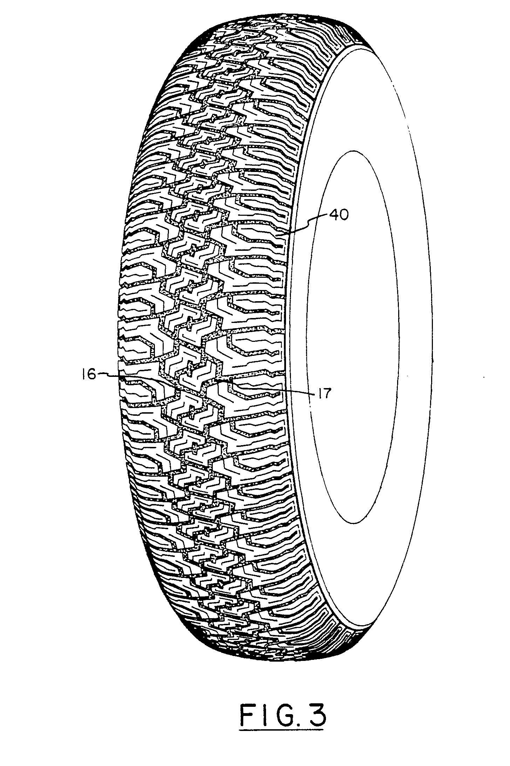

While certain representative embodiments and details have been shown for the purpose of illustrating the invention, it will be apparent to those skilled in the art that various changes and modifications may be made therein without departing from the spirit or scope of the invention. For example, referring to figure 3 there is illustrated a modified form of the present invention wherein the central rib 14 is omitted. However, the embodiment of figures 1 and 2 with a centrally located circumferentially extending rib is preferred. The embodiment of figure 3 is provided with a pair of circumferentially extending grooves 16 and 17 and shoulder elements 40 as previously described with regard to figure 1.

**Claims**

1. A pneumatic radial passenger tire (10) having a ground engaging tread portion (12), said tread portion having a pair of axially opposed tread edges, said tread portion comprising at least one first (16) and one second (17) circumferentially continuous grooves formed by alternately disposed axially and circumferentially extending segments (20—23; 25—28), each said first groove (16) comprising a first circumferentially extending segment (20), extending from substantially one end of said first circumferentially extending segment (20) there is provided a first axially extending segment (21), extending from the other end of said first axially extending segment (21) there is provided a second circumferentially extending segment (22) oriented at approximately the same angle as said first circumferentially extending segment (20), extending from the other end of said second circumferentially extending segment (22) there is provided a second axially extending segment (23) oriented at an angle in the range of 40° to 70° with respect to the mid-circumferential centerplane (CP) and being disposed in the opposite sense as said first axially extending segment (21), said second axially extending segment (23) extends to the next circumferentially adjacent first circumferentially extending segment (20), said segments (20, 21, 22, 23) repeating in sequence throughout the circumference of said tire, said second groove (17) being substantially identical to said first groove (16) and being out of phase therewith, said second groove comprising a first circumferentially extending segment (25), a first axially extending segment (26) extending from substantially one end of said first circumferentially extending segment (25) and being oriented at substantially the same angle as the second axial segment (23) of said first groove (16), a second circumferentially extending segment (27) substantially parallel to first segment (25) of said second groove and a second axial segment (28) extending from said second circumferential segment (27) of said second groove and being oriented at substantially the same angle as said first axial segment (26) of said second groove, said second groove (17) then repeating the sequence of segments (25, 26, 27, 28) throughout the circumference of the tire, a first connecting groove (30) is provided between said first and second grooves (16, 17), and a substantially axially extending groove (38) extending into the shoulder area of the tire at an angle from 70° to 90° with respect to the mid-circumferential centerplane (CP), characterized by said first connecting groove (30) being oriented at substantially the same angle as said second axial segment (23) of the first groove (16) and said first axial segment (26) of said second groove (17), a second connecting groove (32) is provided which connects the juncture of said second circumferential segment (22) and second axial segment (23) of said first groove (16) with said first axial segment (26) and second circumferential segment (27) of said second groove (17), said second connecting groove (32) having substantially the same configuration as said first and second grooves (16, 17), said substantially axially extending groove (38) extending from each of the junctures of said second axial segment (28) and said first circumferential segment (25) of said second groove (17), the first circumferentially extending segment (20) of the first groove (16) being oriented at an angle from 2° to 20° with respect to the mid-circumferential centerplane (CP) of the tire, the first axially extending segment (21) of the first groove (16) being oriented at an angle from 60° to 80° with respect to the mid-circumferential centerplane (CP) of the tire.

2. A pneumatic tire (10) according to claim 1 characterized by an independent block (40) formed by said axially extending grooves (38) and said second groove (17) being provided with a subgroove (42) having a depth no greater than approximately 50% the depth of said circumferentially continuous grooves (16, 17), said axially extending subgroove (42) having a configuration substantially parallel to said second circumferentially extending segment (27) and said first axially extending segment (26) of said second groove (17), said subgroove (42) having a third segment which extends substantially parallel to the axially extending grooves (38) down into the shoulder of said tire.

3. A pneumatic tire (10) according to claim 1 characterized by said tread portion (12) being provided with a substantially centrally located circumferentially extending rib (14) wherein one each of said first and second grooves (16, 17) are disposed on both axial sides of said rib.

4. A pneumatic tire (10) according to claim 1 characterized by said shoulder block (40) having a circumferential length (CL) of 27% of said tread width (TW).

5. A pneumatic tire (10) according to claim 1 characterized by said shoulder blocks (40) extending axially inwardly into said tread portion from said tread edge a distance (D) of at least 20% of said tread width (TW).

6. A pneumatic tire (10) according to claim 1 characterized by said first circumferential segment (20) of said first groove (16) being oriented at an angle from 5° to 11° with respect to the mid-circumferential centerplane (CP) of said tire.

7. A pneumatic tire (10) according to claim 1 characterized by said first circumferential segment (20) of said first groove (16) being oriented at 6° with respect to the mid-circumferential centerplane (CP) of said tire.

8. A pneumatic tire (10) according to claim 1 characterized by said first axial segment (21) of said first groove (16) being oriented at an angle from about 65° to 75° with respect to the mid-circumferential centerplane (CP) of said tire.

9. A pneumatic tire (10) according to claim 1 characterized by said first axial segment (21) of said first groove (16) being oriented at an angle of about 71° with respect to the mid-circumferential centerplane (CP) of the tire.

10. A pneumatic tire (10) according to claim 1 characterized by said second axially extending segment (23) of said first groove (16) being oriented at an angle from 50° to 60° with respect to the mid-circumferential centerplane (CP) of said tire.

11. A pneumatic tire (10) according to claim 1 characterized by an axially extending groove (38) being oriented at an angle of between 70° and 85° with respect to the mid-circumferential centerplane (CP) of said tire.

12. A pneumatic tire (10) according to claim 1 characterized by said first circumferentially extending segment (20) of said first groove (16) being oriented at an angle of approximately 6° with respect to the mid-circumferential centerplane (CP) of the said tire, said first axial segment (21) of said first groove (16) being oriented at approximately 71° with respect to the mid-circumferential centerplane (CP) of the tire, and said axially extending groove (38) being oriented at angle of approximately 81° with respect to the mid-circumferential centerplane (CP) of said tire.

13. A tire according to claim 1 characterized by first and second grooves (16) being spaced a distance (C) axially apart less than about 15% of the width (TW) of said tread portion (12).

14. A tire according to claim 1 characterized by first and second grooves (16, 17) being spaced apart a distance (C) axially apart less than about 10% of the width (TW) of said tread portion (12).

15. A tire (10) according to claim 1 characterized by said first and second grooves (16, 17) circumferentially traversing axially across said tread portion a distance equal to or less than about 15% of the width (TW) of said tread portion (12).

16. A tire (10) according to claim 1 characterized by said first and second grooves (16, 17) traversing axially across said tread portion a distance (A, B) equal to or less than about 10% of the width (TW) of said tread portion (12).

17. A tire (10) according to claim 1 characterized by the length of said first circumferential segments, (20, 25), said second circumferential segments (22, 27), having lengths which are equal to or less than 10% of the width (TW) of said tread portion (12).

## Patentansprüche

1. Gürtelluftreifen (10) für Personenwagen mit einem den Boden berührenden Laufflächenabschnitt (12), wobei der Laufflächenabschnitt ein Paar axial gegenüberliegender Laufflächenränder aufweist, wobei der Laufflächenabschnitt mit wenigstens einer ersten (16) und einer zweiten (17) zusammenhängenden Umfangsrille versehen ist, die durch abwechselnd angeordnete, sich in Axial- und in Umfangsrichtung erstreckende Segmente (20—23; 25—28) gebildet werden, wobei jede erste Rille (16) ein erstes sich in Umfangsrichtung erstreckendes Segment (20) aufweist, wobei etwa von einem Ende des ersten sich in Umfangsrichtung erstreckenden Segmentes (20) ein erstes axial sich erstreckendes Segment (21) vorgesehen ist, wobei von dem anderen Ende des ersten axial sich erstreckenden Segmentes (21) ein zweites sich in Umfangsrichtung erstreckendes Segment (22) vorgesehen ist, das unter etwa dem gleichen Winkel orientiert ist wie das erste sich in Umfangsrichtung erstreckende Segment (20), wobei von dem anderen Ende des zweiten sich in Umfangsrichtung erstreckenden Segmentes (22) ein zweites sich axial erstreckendes Segment (23) vorgesehen ist, das unter einem Winkel im Bereich von 40° bis 70° gegenüber der mittleren Umfangsebene (Äquatorialebene) (CP) orientiert ist und das in entgegengesetzter Richtung wie das erste sich axial erstreckende Segment (21) angeordnet ist, wobei sich das zweite axial erstreckende Segment (23) zu dem nächsten, in Umfangsrichtung benachbarten ersten sich in Umfangsrichtung erstreckenden Segment (20) erstreckt, wobei sich die Segmente (20, 21, 22, 23) aufeinanderfolgend über den Umfang des Reifens wiederholen, wobei die zweite Rille (17) im wesentlichen identisch ist zu der ersten Rille (16) und phasenverschoben zu dieser ist, wobei die zweite Rille ein erstes sich in Umfangsrichtung erstreckendes Element (25), ein erstes sich in Axialrichtung erstreckendes Segment (26), das sich im wesentlichen von einem Ende des ersten sich in Umfangsrichtung erstreckenden Segmentes (25) erstreckt und im wesentlichen unter dem gleichen Winkel wie das zweite axiale Segment (23) der ersten Rille (16) orientiert ist, ein zweites sich in Umfangsrichtung erstreckendes Segment (27), das im wesentlichen parallel ist zu dem ersten Segment (25) der zweiten Rille, und ein zweites axiales Segment (28) aufweist, das sich von dem zweiten sich in Umfangsrichtung erstreckenden Segment (27) der zweiten Rille aus erstreckt und im wesentlichen unter dem gleichen Winkel wie das erste axiale Segment (26) der zweiten Rille orientiert ist, wobei die zweite Rille (17) dann die Folge der Segmente (25, 26, 27, 28) über den Umfang des Reifens wiederholt, wobei eine erste Verbindungsrille (30) zwischen der ersten und der zweiten Rille (16, 17) vorgesehen ist, und wobei eine sich im wesentlichen axial erstreckende Rille (38) sich in den Schulterbereich des Reifens unter einem Winkel von 70° bis 90° gegenüber der mittleren Umfangsebene (CP) erstreckt, dadurch gekennzeichnet, daß die erste Verbindungsrille (30) im wesentlichen unter dem gleichen Winkel orientiert ist wie das zweite axiale Segment (23) der ersten Rille (16) und das erste axiale Segment (26) der zweiten Rille (17), daß eine zweite Verbindungsrille (32) vorgesehen ist, welche die Verbindungsstelle des zweiten Umfangssegmentes (22) mit dem zweiten axialen Segment (23) der ersten Rille (16) und des ersten axialen Segmentes (26) mit dem zweiten Umfangssegment (27) der zweiten Rille (17) verbindet, daß die zweite Verbindungsrille (32) im wesentlichen die gleiche Gestalt aufweist wie die erste und die zweite Rille (16, 17), daß sich die im wesentlichen axial erstreckende Rille (38) von jeder der Verbindungsstellen des zweiten axialen Segmentes (28) mit dem ersten Umfangssegment (25) der zweiten Rille (17) erstreckt, daß das erste sich in Umfangsrichtung erstreckende Segment (20) der ersten Rille (16) unter einem Winkel von 2° bis 20° gegenüber der mittleren Umfangsebene (CP) des Reifens orientiert ist, und daß das erste sich axial erstreckende Segment (21) der ersten Rille (16) unter einem Winkel von 60° bis 80° gegenüber der mittleren Umfangsebene (CP) des Reifens orientiert ist.

2. Luftreifen (10) nach Anspruch 1, dadurch gekennzeichnet, daß ein unabhängiger Block oder Stollen (40), der von den sich axial erstreckenden Rillen (38) und der zweiten Rille (17) gebildet wird, mit einer Hilfsrille (42) versehen ist, die eine Tiefe von nicht mehr als etwa 50% der Tiefe der sich in Umfangsrichtung erstreckenden zusammenhängenden Rille (16, 17) aufweist, daß die sich axial erstreckende Hilfsrille (42) eine Gestalt aufweist, die im wesentlichen parallel ist zu dem zweiten sich in Umfangsrichtung erstreckenden Segment (27) und dem ersten sich in Axialrichtung erstreckenden Segment (26) der zweiten Rille (17), und daß die Hilfsrille (42) ein drittes Segment aufweist, welches sich im wesentlichen parallel zu den sich axial erstreckenden Rillen (38) nach unten in die Schulter des Reifens erstreckt.

3. Luftreifen (10) nach Anspruch 1, dadurch gekennzeichnet, daß der Laufflächenabschnitt (12) mit einer im wesentlichen zentral angeordneten, sich in Umfangsrichtung erstreckenden Rippe (14) versehen ist, und daß eine von jeder der ersten und zweiten Rillen (16, 17) an beiden Axialseiten der Rippe angeordnet ist.

4. Luftreifen (10) nach Anspruch 1, dadurch gekennzeichnet, daß die Schulterblöcke oder -stollen (40) eine Länge (CL) in Umfangsrichtung von 27% der Laufflächenbreite (TW) aufweisen.

5. Luftreifen nach Anspruch 1, dadurch gekennzeichnet, daß die Schulterblöcke oder -stollen (40) sich axial nach innen in den Laufflächenabschnitt von dem Laufflächenrand mit einer Länge (D) von wenigstens 20% der Laufflächenbreite (TW) erstrecken.

6. Luftreifen (10) nach Anspruch 1, dadurch gekennzeichnet, daß das erste Umfangssegment (20) der ersten Rille (16) unter einem Winkel von 5° bis 11° gegenüber der mittleren Umfangsebene (CP) des Reifens orientiert ist.

7. Luftreifen (10) nach Anspruch 1, dadurch gekennzeichnet, daß das erste Umfangssegment (20) der ersten Rille (16) unter einem Winkel von 6° gegenüber der mittleren Umfangsebene (CP) des Reifens orientiert ist.

8. Luftreifen (10) nach Anspruch 1, dadurch gekennzeichnet, daß das erste axiale Segment (21) der ersten Rille (16) unter einem Winkel von etwa 65° bis 75° gegenüber der mittleren Umfangsebene (CP) des Reifens orientiert ist.

9. Luftreifen (10) nach Anspruch 1, dadurch gekennzeichnet, daß das erste axiale Segment (25) der ersten Rille (16) unter einem Winkel von etwa 71° gegenüber der mittleren Umfangsebene (CP) des Reifens orientiert ist.

10. Luftreifen (10) nach Anspruch 1, dadurch gekennzeichnet, daß das zweite sich axial erstreckende Segment (23) der ersten Rille (16) unter einem Winkel von 50° bis 60° gegenüber der mittleren Umfangsebene (CP) des Reifens orientiert ist.

11. Luftreifen (10) nach Anspruch 1, dadurch gekennzeichnet, daß eine sich axial erstreckende Rille (38) unter einem Winkel von etwa 70° bis 85° gegenüber der mittleren Umfangsebene (CP) des Reifens orientiert ist.

12. Luftreifen (10) nach Anspruch 1, dadurch gekennzeichnet, daß das erste sich in Umfangsrichtung erstreckende Segment (20) der ersten Rille (16) unter einem Winkel von etwa 6° gegenüber der mittleren Umfangsebene (CP) des Reifens orientiert ist, daß das erste axiale Segment (21) der ersten Rille (16) unter einem Winkel von etwa 71° gegenüber der mittleren Umfangsebene (CP) des Reifens orientiert ist, und daß die sich axial erstreckende Rille (38) unter einem Winkel von etwa 81° gegenüber der mittleren Umfangsebene (CP) des Reifens orientiert ist.

13. Luftreifen nach Anspruch 1, dadurch gekennzeichnet, daß die erste und die zweite Rille (16) in Axialrichtung einen Abstand (C) von weniger als etwa 15% der Breite (TW) des Laufflächenabschnitts (12) aufweisen.

14. Reifen nach Anspruch 1, dadurch gekennzeichnet, daß die erste und die zweite Rille (16, 17) in Axialrichtung einen Abstand (C) von weniger als etwa 10% der Breite (TW) des Laufflächenabschnitts (12) aufweisen.

15. Luftreifen (10) nach Anspruch 1, dadurch gekennzeichnet, daß die erste und die zweite Rille (16, 17) in Umfangsrichtung axial quer über die Laufflächenbreite mit einer Länge verlaufen, die gleich oder kleiner ist als 15% der Breite (TW) des Laufflächenabschnitts (12).

16. Luftreifen (10) nach Anspruch 1, dadurch gekennzeichnet, daß die erste und die zweite Rille (16, 17) axial quer über den Laufflächenabschnitt mit einer Länge (A, B) von gleich oder weniger als 10% der Breite (TW) des Laufflächenabschnitts (12) verlaufen.

17. Reifen (10) nach Anspruch 1, dadurch gekennzeichnet, daß die Länge der ersten Umfangssegmente (20, 25) und der zweiten Umfangssegmente (22, 27) gleich oder kleiner ist als 10% der Breite (TW) des Laufflächenabschnitts (12).

**Revendications**

1. Bandage pneumatique tourisme à carcasse radiale (10) comportant une bande de roulement (12) venant s'engager sur le sol, cette bande de roulement comportant deux bords axialement opposés, ainsi qu'au moins une première (16) et une seconde (17) rainure circonférentiellement continues formées par des segments (20—23; 25—28) alternativement disposés axialement et s'étendant dans le sens circonférentiel, chaque première rainure (16) comprenant un premier segment (20) s'étendant dans le sens circonférentiel et, pratiquement à partir d'une extrémité de ce dernier, est prévu un premier segment (21) s'étendant dans le sens axial et, à partir de l'autre extrémité de ce dernier, est prévu un second segment (22) s'étendant dans le sens circonférentiel et orienté à peu près sous le même angle que celui du premier segment (20) s'étendant dans le sens circonférentiel et, à partir de l'autre extrémité de ce second segment (22) s'étendant dans le sens circonférentiel est prévu un second segment (23) s'étendant dans le sens axial et orienté sous un angle se situant entre 40° et 70° par rapport au plan central circonférentiel médian (CP), tout en étant disposé dans un sens opposé par rapport au premier segment (21) s'étendant axialement, ce second segment (23) s'étendant axialement allant jusqu'au premier segment circonférentiel suivant adjacent (20), ces segments (20, 21, 22, 23) se répétant successivement sur toute la circonférence du bandage pneumatique, la seconde rainure (17) étant pratiquement identique à la première rainure (16) vis-à-vis de laquelle elle est décalée, cette seconde rainure comprenant un premier segment (25) s'étendant dans le sens circonférentiel, un premier segment (26) s'étendant dans le sens axial pratiquement à partir d'une extrémité du premier segment (25) s'étendant dans le sens circonférentiel, tout en étant orienté pratiquement sous le même angle que le second segment axial (23) de la première rainure (16), un second segment (27) s'étendant circonférentiellement et pratiquement parallèle au premier segment (25) de la seconde rainure, ainsi qu'un second segment axial (28) s'étendant à partir du second segment circonférentiel (27) de la seconde rainure, tout en étant orienté pratiquement sous le même angle que le premier segment axial (26) de la seconde rainure, cette seconde rainure (17) répétant alors la séquence de segments (25, 26, 27, 28) sur toute la circonférence du bandage pneumatique, une première rainure de raccordement (30) étant prévue entre les premières et les secondes rainures (16, 17), ainsi qu'une rainure (38) s'étendant pratiquement dans le sens axial dans la zone des épaulements du bandage pneumatique sous un angle de 70 à 90° vis-à-vis du plan central circonférentiel médian (CP), caractérisé en ce que la première rainure de raccordement (30) est orientée pratiquement sous le même angle que le second segment axial (23) de la première rainure (16) et le premier segment axial (26) de la seconde rainure (17), une seconde rainure de raccordement (32) étant prévue pour raccorder la jonction du second segment circonférentiel (22) et du second segment axial (23) de la première rainure (16) avec le premier segment axial (26) et le second segment circonférentiel (27) de la seconde rainure (17), cette seconde rainure de raccordement (32) ayant pratiquement la même configuration que les premières et secondes rainures (16, 17), cette rainure (38) s'étendant pratiquement dans le sens axial partant de chacune des jonctions du second segment axial (28) et du premier segment circonférentiel (25) de la seconde rainure (17), le premier segment (20) de la première rainure (16), qui s'étend dans le sens circonférentiel, étant orienté sous un angle de 2 à 20° par rapport au plan central circonférentiel médian (CP) du bandage pneumatique, le premier segment (21) de la première rainure (16), qui s'étend axialement, étant orienté sous un angle de 60 à 80° par rapport au plan central circonférentiel médian (CP) du bandage pneumatique.

2. Bandage pneumatique (10) selon la revendication 1, caractérisé en ce qu'un bloc indépendant (40) formé par les rainures axiales (38) et la seconde rainure (17) est pourvu d'une sous-rainure (42) ayant une profondeur ne dépassant pas environ 50% de la profondeur de ces rainures circonférentielles continues (16, 17), cette sous-rainure axiale (42) ayant une configuration pratiquement parallèle au second segment circonférentiel (27) et au premier segment axial (26) de la seconde rainure (17), cette sous-rainure (42) comportant un troisième segment s'étendant pratiquement parallèlement aux rainures axiales (38) jusqu'à l'intérieur de l'épaulement du bandage pneumatique.

3. Bandage pneumatique (10) selon la revendication 1, caractérisé en ce que la bande de roulement (12) comporte une nervure (14) pratiquement centrale et s'étendant dans le sens circonférentiel, nervure dans laquelle chacune des première et seconde rainures (16, 17) est disposée sur les deux côtés axiaux de cette nervure.

4. Bandage pneumatique (10) selon la revendication 1, caractérisé en ce que les blocs formant épaulements (40) ont une longueur circonférentielle (CL) représentant 27% de la largeur de bande de roulement (TW).

5. Bandage pneumatique (10) selon la revendication 1, caractérisé en ce que les blocs formant épaulements (40) s'étendant axialement vers l'intérieur de la bande de roulement à partir du bord de cette dernière sur une distance (D) représentant au moins 20% de cette largeur de bande de roulement (TW).

6. Bandage pneumatique (10) selon la revendication 1, caractérisé en ce que le premier segment circonférentiel (20) de la première rainure (16) est orienté sous un angle de 5° à 11° par rapport au plan central circonférentiel médian (CP) du bandage pneumatique.

7. Bandage pneumatique (10) selon la revendication 1, caractérisé en ce que le premier segment circonférentiel (20) de la première rainure (16) est orienté sous un angle de 6° par rapport au plan central circonférentiel médian (CP) du bandage pneumatique.

8. Bandage pneumatique (10) selon la revendication 1, caractérisé en ce que le premier segment axial (21) de la première rainure (16) est orienté sous un angle d'environ 65° à 75° par rapport au plan central circonférentiel médian (CP) du bandage pneumatique.

9. Bandage pneumatique (10) selon la revendication 1, caractérisé en ce que le premier segment axial (21) de la première rainure (16) est orienté sous un angle d'environ 71° par rapport au plan central circonférentiel médian (CP) du bandage pneumatique.

10. Bandage pneumatique (10) selon la revendication 1, caractérisé en ce que le second segment axial (23) de la première rainure (16) est orienté sous un angle de 50° à 60° par rapport au plan central circonférentiel médian (CP) du bandage pneumatique.

11. Bandage pneumatique (10) selon la revendication 1, caractérisé en ce qu'il comporte une rainure (38) s'étendant axialement et orientée sous un angle compris entre 70° et 85° par rapport au plan central circonférentiel médian (CP) du bandage pneumatique.

12. Bandage pneumatique (10) selon la revendication 1, caractérisé en ce que le premier segment circonférentiel (20) de la première rainure (16) est orienté sous un angle d'environ 6° par rapport au plan central circonférentiel médian (CP) du bandage pneumatique, ce premier segment axial (21) de la première rainure (16) étant orienté sous un angle d'environ 71° par rapport au plan central circonférentiel médian (CP) du bandage pneumatique, tandis que la rainure axiale (38) est orientée sous un angle d'environ 81° par rapport au plan central circonférentiel médian (CP) du bandage pneumatique.

13. Bandage pneumatique (10) selon la revendication 1, caractérisé en ce que la première et la seconde rainure (16) sont espacées d'une distance axiale (C) inférieure à environ 15% de la largeur (TW) de la bande de roulement (12).

14. Bandage pneumatique selon la revendication 1, caractérisé en ce que la première et la seconde rainure (16, 17) sont espacées axialement l'une de l'autre d'une distance (C) inférieure à environ 10% de la largeur (TW) de la bande de roulement (12).

15. Bandage pneumatique (10) selon la revendication 1, caractérisé en ce que la première et la seconde rainure (16, 17) passent circonférentiellement et axialement à travers la bande de roulement sur une distance égale ou inférieure à environ 15% de la largeur (TW) de la bande de roulement (12).

16. Bandage pneumatique (10) selon la revendication 1, caractérisé en ce que la première et la seconde rainure (16, 17) passent axialement à travers la bande de roulement sur une distance (A, B) égale ou inférieure à environ 10% de la largeur (TW) de la bande de roulement (12).

17. Bandage pneumatique (10) selon la revendication 1, caractérisé en ce que les premiers segments circonférentiels (20, 25) et les seconds segments circonférentiels (22, 27) ont des longueurs égales ou inférieures à 10% de la largeur (TW) de la bande de roulement (12).

F I G. 1

FIG.2

FIG. 3